# EUROPÄISCHE PATENTANMELDUNG

(11) **EP 3 239 567 A1**
(43) Veröffentlichungstag der Anmeldung: **01.11.2017**
(21) Anmeldenummer: 16167188.8
(22) Anmeldetag: 27.04.2016
(51) Int. Cl.: F16K 3/02, F16K 3/18, F16K 5/02, F16K 51/02

(54) **TORVENTIL MIT KURVENFÜHRUNG**

(71) Anmelder: VAT Holding AG, 9469 Haag (CH)
(72) Erfinder: NETZER, Martin, A-6700 Bludenz (AT); EHRNE, Florian, CH-9467 Frümsen (CH)
(74) Vertreter: Kaminski Harmann

(57) **Zusammenfassung**

Vakuumventil (10) zum im Wesentlichen gasdichten Verschliessen einer Öffnung (11) mit einer die Öffnung umlaufenden Ventilwand (12) mit Ventilsitz und einer Verschlussanordnung (17) mit einem Verschlusselement (14) mit einer Verschlussseite (15). Das Ventil hat zudem eine Kopplungseinheit (18) und mindestens ein Verbindungselement (20), welches derart mit dem Verschlusselement (14) und der Kopplungseinheit (18) verbunden ist, dass das Verschlusselement (14) mit im Wesentlichen paralleler Ausrichtung relativ zur Kopplungseinheit (18) beweglich gelagert ist. Mindestens eine Koppelstange (19) ist mit der Kopplungseinheit (18) mechanisch gekoppelt. Mittels einer Antriebseinheit ist die Koppelstange (19) in beide Verstellrichtungen entlang ihrer Koppelstangenachse (K) verstellbar. Somit ist die Verschlussanordnung (17) zwischen einer die Öffnung (11) freigebenden Offenposition, einer über die Öffnung (11) geschobenen Zwischenposition und einer die Öffnung (11) verschliessenden Geschlossenposition im Wesentlichen parallel zum Ventilsitz verschiebbar. Die Verschlussanordnung (17) weist ein Rückstellelement (21) auf, welches derart mit dem Verschlusselement (14) und der Kopplungseinheit (18) verbunden ist, dass durch eine dadurch anliegende Rückstellkraft das Verschlusselement (14) in der Offenposition in der im Wesentlichen parallel beabstandeten Gegenüberlage zum Ventilsitz vorliegt. Das Vakuumventil (10) weist ein Umlenkmittel (22) und ein Führungselement (23) auf, wobei das Umlenkmittel (22) und das Führungselement (23) derart angeordnet sind, dass bei der Verschiebung aus der Zwischenposition in die Geschlossenposition eine Querbewegung des Verschlusselements (14) quer zur Koppelstangenachse (K) eingeleitet und/oder bewirkt wird.

## Beschreibung

Die Erfindung betrifft ein Vakuumventil zum im Wesentlichen gasdichten Verschliessen einer Öffnung oder eines Volumens nach dem Oberbegriff des Anspruchs 1.

Allgemein sind Vakuumventile zum im Wesentlichen gasdichten Schliessen eines Fliesswegs, Strömungswegs oder Strahlengangs, der durch eine in einem Ventilgehäuse ausgeformte Öffnung führt, in unterschiedlichen Ausführungsformen aus dem Stand der Technik bekannt. Vakuumschieberventile kommen insbesondere im Bereich der IC- und Halbleiterfertigung aber beispielsweise auch im Bereich der Elektronenmikroskopie, die ebenfalls in einer geschützten Atmosphäre möglichst ohne das Vorhandensein verunreinigender Partikel stattfinden muss, zum Einsatz.

Beispielsweise durchlaufen in einer Fertigungsanlage für Halbleiter-Wafer oder Flüssigkristall-Substrate die hochsensiblen Halbleiter- oder Flüssigkristall-Elemente sequentiell mehrere Prozesskammern, in denen die innerhalb der Prozesskammer befindlichen Halbleiterelemente mittels jeweils einer Bearbeitungsvorrichtung bearbeitet werden. Sowohl während des Bearbeitungsprozesses innerhalb der Prozesskammer, als auch während des Transports von Prozesskammer zu Prozesskammer müssen sich die hochsensiblen Halbleiterelemente stets in geschützter Atmosphäre - insbesondere im Vakuum - befinden. Die Prozesskammern sind beispielsweise über Verbindungsgänge miteinander verbunden, wobei die Prozesskammern mittels Vakuumschieberventile zum Transfer der Teile von der einen zur nächsten Prozesskammer geöffnet und im Anschluss zur Durchführung des jeweiligen Fertigungsschritts gasdicht verschlossen werden können. Derartige Ventile werden aufgrund des beschriebenen Anwendungsgebiets auch als Vakuum-Transferventile und aufgrund ihres rechteckigen Öffnungsquerschnitts auch als Rechteckschieber bezeichnet.

Aus dem Stand der Technik sind ferner diverse Ausführungsformen von Vakuumventilen, insbesondere deren Dichtungs- und Antriebstechnologie, bekannt. Abhängig von der jeweiligen Antriebstechnologien wird insbesondere zwischen Vakuumschieberventilen oder Schieberventilen, auch Ventilschieber oder Rechteckschieber genannt, und Pendelventilen unterschieden, wobei das Schliessen und Öffnen im Stand der Technik meist in zwei Schritten erfolgt.

In einem ersten Schritt wird ein Ventilverschluss, insbesondere ein Verschlussteller, im Falle eines Schieberventils, wie beispielsweise aus der US 6,416,037 (Geiser) oder der US 6,056,266 (Blecha) bekannt, linear über eine Öffnung im Wesentlichen parallel zum Ventilsitz verschoben oder im Falle eines Pendelventils, wie beispielsweise aus der US 6,089,537 (Olmsted) bekannt, um eine Schwenkachse über die Öffnung geschwenkt, ohne dass hierbei eine Berührung zwischen dem Verschlussteller und dem Ventilsitz des Ventilgehäuses stattfindet. In einem weiteren Schritt wird der Verschlussteller mit dessen Verschlussseite auf den Ventilsitz des Ventilgehäuses gedrückt, so dass die Öffnung gasdicht verschlossen wird. Die Abdichtung kann z.B. entweder über einen auf der Verschlussseite des Verschlusstellers angeordneten Dichtungsring, der auf den die Öffnung umlaufenden Ventilsitz gepresst wird, erfolgen, oder über einen Dichtungsring auf dem Ventilsitz, gegen den die Verschlussseite des Verschlusstellers gedrückt wird.

Aus der US 5,769,952 (Komino) ist ein als Vakuum-Transferventil ausgebildetes Schieberventil bekannt, das sich im Wesentlichen aus einem Linearverstellantrieb, einer entlang ihrer Schubstangenachse linear verschiebbaren Schubstange und einem Verschlussteller zusammensetzt. Der Verschlussteller ist über zwei Schenkel mit der Schubstange verbunden. Durch Verstellen der Schubstange linear entlang der Schubstangenachse in Schliessrichtung kann der Verschlussteller parallel über die Ventilöffnung verschoben werden, wobei sich der Verschlussteller in beanstandeter Gegenüberlage zum Ventilsitz, welcher die Öffnung umgibt, befindet. Die beiden Schenkel sind jeweils an dem einen Schenkelende an einer sich quer zur Schubstange ersteckenden und parallel zur Ventilsitzebene verlaufenden Querstange und jeweils an dem anderen Schenkelende an dem Verschlussteller schwenkbar mittels Schwenklager gelagert. Beide Schenkel sind in Richtung der Querstange parallel zueinander angeordnet und haben seitens des Verschlusstellers und seitens der Querstange jeweils eine gemeinsame geometrische Schwenkachse. Die Schenkel halten den Verschlussteller derart, dass sich die querstangenseitige geometrische Schwenkachse in Bezug auf die Schliessrichtung der lineare Verstellrichtung der Schubstange unterhalb der verschlussteilseitigen Schwenkachse befindet, so dass eine entgegen der Schliessrichtung der Schubstange wirkende Kraft auf den Verschlussteller zu einer Verringerung des Abstandes der beiden Schwenkachsen in Bezug auf die Schliessrichtung führt. Am Ende des linearen Verstellwegs des Verschlusstellers ist eine Führungsrolle angeordnet. Kommt es zu einem Kontakt zwischen dem Verschlussteller und der Führungsrolle, kann der Verschlussteller nicht mehr weiter in Schliessrichtung verstellt werden. Der Linearverstellantrieb übt jedoch weiterhin eine Kraft auf den Verschlussteller aus, so dass die Schenkel ausschwenken, sich somit der senkrechten Stellung zur linearen Verstellrichtung nähern und als Hebel wirken kann. Der Verschlussteller wird hierdurch in Richtung zum Ventilsitz verstellt und auf diesen gedrückt wird.

Ein Vorteil eines derartigen Schieberventils mit einem Schenkelmechanismus ist der relativ einfach aufgebaute Antrieb, da die Schubstange nur linear verschoben werden muss. Ein Problem stellen jedoch die senkrecht auf die Schubstangenachse wirkenden Kräfte dar, die von der Schubstangenlagerung aufgenommen werden müssen. Da sich der Verschlussteller auf der Führungsrolle abstützen und hierbei grosse Kräfte aufnehmen muss, ist eine gross dimensionierte Ausgestaltung des Verschlusstellers erforderlich. Aufgrund der Anordnung der Schwenkachsen ist die parallele Ausrichtung des Verschlusstellers zum Ventilsitz nicht gewährleistet, weshalb der Verschlussteller beim Kontaktieren des Ventilsitzes zunächst schräg aufsitzt, Scherkräfte auf die Dichtung unvermeidbar sind und keine gleichmässig verteilte Anpresskraft gewährleistet ist. Durch Verwendung der Führungsrolle und der Schwenklager kann die Generierung von Partikeln insbesondere aufgrund von Reibung nicht verhindert werden, weshalb die Partikelfreiheit nicht gewährleistet ist.

In der US 7,980,0529 wird ein Vakuumschieberventil gezeigt, bei welchem an einer linear verstellbaren Schubstange mittels zweier parallelogrammartig schwenkbarer und in Verstellrichtung der Schubstange parallel beabstandeter Schenkel ein Verschlussteil gelagert ist. Aufgrund der parallelogrammartigen Lagerung über die Schenkel ist das Verschlussteil stets parallel zur Schubstange und zum Ventilsitz ausgerichtet. In einem in Schliessrichtung der linear verstellbaren Schubstange ausgeschwenkten Zustand des Verschlussteils wird das Versschlussteil durch lineares Verstellen der Schubstange parallel über die Öffnung des Ventils soweit geschoben, bis das Verschlussteil einen oberhalb der Öffnung angebrachten Stopper berührt. Der Stopper hindert das Verschlussteil an einer weiteren Bewegung in Schliessrichtung. Da die Schubstange jedoch weiterhin in Schliessrichtung verstellt wird, schwenken die Schenkel in Richtung zum Ventilsitz aus, so dass das Verschlussteil auf den Ventilsitz gedrückt und die Öffnung somit verschlossen wird.

Auch in der US 4,491,145 (Williams et al.), der US 5,415,375 (Gaboriault), der US 2,841,361 (Palmer) und der GB 257,254 werden Schieberventile mit derartigen parallelogrammgeführten, mechanisch gelagerten Schenkeln zum Andrücken eines Ventilverschlusses auf einen Ventilsitz durch Ausschwenken der Schenkel gezeigt. Gemein ist diesen Ausführungen, dass ihr Betrieb aufgrund der zahlreichen Reibstellen, insbesondere der Lagerungen der Schenkel, mit einer verhältnismässig grossen Partikelerzeugung verbunden ist und ein Einsatz im Hochrein-Vakuumbereich, in welchem die freien Partikel auf ein Mindestmass zu halten sind, weitgehend ausgeschlossen ist.

Für Vakuum- oder Hochvakuumanwendungen, bei welchen verhältnismässig grosse Werkstücke zu bearbeiten sind, kann das Verschlusselement entsprechend sehr viel grösser ausfallen müssen als z.B. für das Verschliessen einer Vakuumkammer eines Elektronenmikroskops nötig. Der Verschluss muss hierzu oft derart gestaltet sein, dass auch grosse Teile in die Vakuumkammer eingebracht werden können.

Insbesondere kann das Verschlusselement hierzu in Form einer Türe oder eines Tors ausgestaltet sein. Hierbei verursacht somit auch schon allein das Eigengewicht des Verschlusses eine zusätzliche Beanspruchung des Ventils.

Je grösser dimensioniert das Verschlusselement ist, desto grösser sind die Kräfte, die bei einer Schliess- oder Öffnungsbewegung des Verschlusses wirken. Bei einem vertikal schliessenden und öffnenden Ventiltor beispielsweise muss bei einem Schliessen des Ventils die kinetische Bewegungsenergie des Tors in potentielle Lageenergie überführt werden. Dabei ist von Interesse, dass das Schliessen mit möglichst kurzem Zeitbedarf geschieht, die Bewegung des Tors also vergleichsweise schnell erfolgt. Auch diese gewünschte Schnelligkeit bei der Bearbeitung von Werkstücken trägt zur Grösse der dabei entstehenden kinetischen Energie des Tors bei. Kritisch ist hier folglich der Verschleiss der einzelnen Ventilteile aufgrund der gewünscht schnellen Bewegung - Beschleunigen und Abbremsen - von verhältnismässig grossen Massen. Dabei treten insbesondere Abnutzungen an solchen Ventilteilen auf, die für das Abbremsen oder Bewegungsbegrenzen des Verschlusses vorgesehen sind.

Gleichzeitig ergeben sich aufgrund der schnellen Bewegung und Grösse oftmals Schwierigkeiten in Bezug auf die sichere Gewährleistung eines gasdichten Verschlusses einer Kammer.

Es ist daher Aufgabe der vorliegenden Erfindung ein Vakuumventil im Besonderen für die Bearbeitung von verhältnismässig grossen Werkstücken, insbesondere ein Türoder Torventil, bereitzustellen, welches eine Verbesserung hinsichtlich dessen Verschleisseigenschaften aufweist.

Eine Aufgabe der Erfindung ist es insbesondere ein Torventil bereitzustellen, welches eine verbesserte abgedämpfte Schliessbewegung des Verschlusselements und dabei eine verlässliches Verschliessen einer Öffnung anbietet.

Diese Aufgaben werden durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.

Die Erfindung betrifft ein Vakuumventil, insbesondere ein Vakuumschieberventil, insbesondere ausgebildet als Toroder Türventil, zum im Wesentlichen gasdichten Verschliessen einer Öffnung, mit einer die Öffnung umlaufenden Ventilwand mit Ventilsitz und einer Verschlussanordnung. Die Verschlussanordnung weist ein Verschlusselement mit einer Verschlussseite, eine Kopplungseinheit und mindestens ein Verbindungselement, insbesondere Hebelmechanismus, auf, welches derart mit dem Verschlusselement und der Kopplungseinheit verbunden ist und derart ausgebildet ist, dass das Verschlusselement mit im Wesentlichen paralleler Ausrichtung relativ zur Kopplungseinheit beweglich gelagert ist.

Das Ventil verfügt zudem über mindestens einer Koppelstange, die mit der Kopplungseinheit mechanisch gekoppelt ist und über eine Linearantriebseinheit, mittels welcher die Koppelstange in die beiden Verstellrichtungen entlang ihrer Koppelstangenachse geradlinig verstellbar und somit die Verschlussanordnung verschiebbar ist. Die Verschlussanordnung ist zwischen einer die Öffnung freigebenden Offenposition, einer über die Öffnung geschobenen Zwischenposition, in welcher sich das Verschlusselement zumindest teilweise in einer im Wesentlichen parallel beabstandeten Gegenüberlage zum Ventilsitz befindet, und einer die Öffnung verschliessenden Geschlossenposition, wobei das Verschlusselement mit dessen Verschlussseite auf den Ventilsitz gedrückt wird und die Öffnung gasdicht verschliesst, im Wesentlichen parallel zum Ventilsitz verschiebbar.

Die Linearantriebseinheit kann beispielsweise als ein Antriebszylinder ausgestaltet sein, welcher insbesondere über einen internen Dämpfungsmechanismus und/oder über eine entsprechende Dämpfungssteuerung verfügt, um bei einem Schliessen des Verschlusses (Ventilteller oder -tor) die Bewegung des Verschlusses vorab abzubremsen bzw. eine vorgedämpfte Schliessbewegung zu erreichen.

Die Verschlussanordnung weist erfindungsgemäss zumindest ein Rückstellelement auf, welches derart mit dem Verschlusselement und der Kopplungseinheit verbunden ist, dass durch eine dadurch anliegende Rückstellkraft und mittels des Verbindungselements das Verschlusselement in der Offenposition und in der Zwischenposition in der definierten, im Wesentlichen parallel beabstandeten Gegenüberlage zum Ventilsitz vorliegt bzw. gehalten wird.

Das Vakuumventil weist ein Umlenkmittel und ein Führungselement auf. Das Umlenkmittel und das Führungselement sind derart ausgeformt und angeordnet, dass bei der Verschiebung aus der Zwischenposition in die Geschlossenposition das Umlenkmittel und das Führungselement derart zusammenwirken, dass eine Querbewegung des Verschlusselements quer zur Koppelstangenachse, insbesondere mit einer vorwiegend orthogonalen Richtungskomponente, eingeleitet und bewirkt wird.

Bei einer solchen erfindungsgemässen Ausführung eines Vakuumventils werden zwei unterschiedliche Systeme kombiniert, die bereits jeweils allein eine deutliche Verbesserung eines Schliessvorgangs bewirken, jedoch zusammen eine noch zusätzliche Optimierung bedeuten.

Durch das Zusammenspiel aus Führungselement und Umlenkmittel, z.B. eine kulissenartige Führung mit einer in oder auf der Kulisse laufenden Rolle, kann ein Andrücken des Ventilverschlusses (z.B. Teller- oder Torverschluss) so geführt werden und erfolgen, dass dabei, d.h. bei einem In-Kontakt-Bringen der Verschlussseite mit dem Ventilsitz fast ausschliesslich noch eine Bewegung des Verschlusses orthogonal zur Ventilsitzfläche erfolgt und dabei keine oder nur noch sehr geringe Querbelastung auf das Dichtmaterial zwischen Ventilsitz und Verschluss auftritt. Das Führungselement bzw. die Kulisse kann hierfür z.B. mit einer kurvenartigen (gekrümmten) Oberfläche ausgestaltet sein, welche eine entsprechende Umlenkung der Richtung der Schliessbewegung des Verschlusses in der letzten Phase des Schliessprozesses bewirkt.

Das Umlenkmittel und das Führungselement kontaktieren im Rahmen der Schliessbewegung insbesondere erst bei Erreichen der Zwischenposition und verlieren den Kontakt im Zuge einer Öffnungsbewegung ebenso erst bei Erreichen der Zwischenposition, so dass während der Bewegung zwischen Zwischenposition und Geschlossenposition Kontakt vorliegt und während der Bewegung zwischen Zwischenposition und Offenposition kein Kontakt vorliegt.

Zum zweiten bewirkt das Rückstellelement (insbesondere eine oder mehrere Federn), dass das Verschlusselement während eines Schliess- oder Öffnungsprozesses des Ventils über den grössten Teil der Bewegungsstrecke (bis zur Bewegung aus der Zwischenposition in die Geschlossenposition oder umgekehrt) mit einem definierten Abstand zur Ventilwand bzw. zu deren Ventilsitz gehalten wird. Dadurch wird verlässlich sichergestellt, dass kein ungewünschter Kontakt zwischen Verschlusselement und Ventilwand während der Bewegung auftritt. Ungewünschte Partikelbildung durch Materialabrieb kann dadurch zuverlässig verhindert werden.

Ein weiterer Vorteil der vorliegenden Erfindung resultiert aus dem Zusammenwirken der beiden oben genannten Ansätze, d.h. eine Energieaufnahme des Rückstellelements durch eine Bewegung des Verschlusselements quer zur Koppelstangenachse (mit zumindest einer Bewegungskomponente orthogonal zu der Achse). Hierdurch kann erreicht werden, dass die Bewegung der Verschlussanordnung vor Erreichen der Verschliessposition abgebremst wird, da ein Teil der kinetischen Bewegungsenergie in Spannenergie des Rückstellelements umgewandelt wird. Dieses Abbremsen der Bewegung hat eine deutlich geringere Beanspruchung eines die Schliessbewegung begrenzenden Anschlags zur Folge. Ein entsprechendes Anstossen an einem solchen Anschlag fällt hierdurch weniger stark aus. Zudem kann aufgrund der verlangsamten Bewegung das tatsächliche Verschliessen der Öffnung in der letzten Bewegungsphase damit präziser und entsprechend in optimierter Weise gesteuert erfolgen.

Das Dämpfen der Schliessbewegung kann also mittels zweier Komponenten - Linearantriebseinheit und Rückstellelement - in zwei Phasen nacheinander oder zeitlich und wirkungsmässig überlappend erfolgen. Die Antriebseinheit übernimmt dabei z.B. zunächst eine Art Vordämpfung (Grobabdämpfung) und verlangsamt damit bereits die Schliessbewegung deutlich, wobei eine weitere Dämpfungswirkung (Feinabdämpfung) durch die Energieaufnahme des Rückstellelements erfolgt.

Bezüglich des Rückstellelements stellt eine Ausführungsform der Erfindung also eine derartige Anordnung des Rückstellelements bereit, dass die Querbewegung des Verschlusselements bei der Verschiebung aus der Zwischenposition in die Geschlossenposition eine Zunahme der Rückstellkraft bewirkt und die Zunahme der Rückstellkraft eine Dämpfung der Bewegung der Verschlussanordnung bei der Bewegung aus der Zwischenposition in die Geschlossenposition bewirkt.

In andere Worte gefasst ist dabei das Rückstellelement derart angeordnet, dass mit der Querbewegung des Verschlusselements bei der Verschiebung von der Zwischenposition in die Geschlossenposition potentielle Energie, insbesondere Spannenergie, an dem Rückstellelement verrichtet wird (das Rückstellelement z.B. weiter gespannt wird), und ein entsprechender Anteil der kinetischen Energie der Verschlussanordnung verursacht durch das Verschieben aus der Offenposition in die Zwischenposition (und weiter in die Geschlossenposition) in diese potentielle Energie umgewandelt wird.

In einer Ausführungsform der Erfindung weist das Führungselement eine Führungsfläche mit definiertem Oberflächenverlauf auf, das Umlenkmittel wirkt bei der Verschiebung aus der Zwischenposition in die Geschlossenposition mit der Führungsfläche zusammen und die Querbewegung des Verschlusselements wird in Abhängigkeit des definierten Oberflächenverlaufs bewirkt.

Insbesondere ist das Führungselement mit einem flachen und quer zur Koppelstangenachse sich erstreckenden, insbesondere keilförmigen Oberflächenverlauf der Führungsfläche oder mit einem gekrümmten, insbesondere kurvenförmigen, Oberflächenverlauf der Führungsfläche ausgebildet. Die Oberfläche ist insbesondere derart ausgeführt, dass der Verlauf mit homogener Krümmung oder zumindest mit gleich bleibender Krümmungsrichtung gegeben ist. Durch eine solche Form der Oberfläche kann eine fliessende Schliessbewegung des Tors realisiert werden.

Erfindungsgemäss wird insbesondere die Querbewegung des Verschlusselements der im Wesentlichen zum Ventilsitz parallelen Verschiebebewegung bei der Verschiebung aus der Offenposition in die Geschlossenposition überlagert.

In einer Ausführungsform der Erfindung weist das Vakuumventil eine Verschlussführung auf, wobei die Verschlussführung mit der Ventilwand und der Verschlussanordnung gekoppelt ist und eine lineare Beweglichkeit der Verschlussanordnung, insbesondere der Kopplungseinheit, in einer Richtung im Wesentlichen parallel zum Ventilsitz bereitstellt.

In einer spezielleren Ausführung weist die Verschlussführung zumindest zwei Führungsschienen auf, welche parallel beabstandet an zwei gegenüberliegenden Seiten der Öffnung an der Ventilwand angeordnet sind und wobei die Kopplungseinheit mittels der Führungsschienen linear geführt ist. Alternativ zu solchen Schienen können andersartige, dem Fachmann bekannte Vorrichtungen mit gleicher Wirkung vorgesehen sein.

Das Vakuumventil kann ferner einen Anschlag aufweisen, wobei der Anschlag so angeordnet ist, dass eine Beweglichkeit der Verschlussanordnung in Richtung der Koppelstangenachse in Schliessrichtung begrenzt ist.

Im Speziellen kann der Anschlag durch das Führungselement selbst gebildet und/oder an der Kopplungseinheit angeordnet sein. Dabei kann es sich auch um ein Gegenstück des Anschlags handeln.

Die Kopplungseinheit schlägt bei Erreichen der Geschlossenposition insbesondere an dem Anschlag an.

Die Bewegung der Verschlussanordnung wird dann - wie oben bereits beschrieben - insbesondere bis zum Anschlag der Kopplungseinheit an dem Anschlag mittels des Rückstellelements abgebremst und das Anschlagen erfolgt entsprechend gedämpft.

Der Anschlag kann alternativ oder zusätzlich im Inneren einer als Antriebszylinder ausgebildeten Linearantriebseinheit ausgeformt sein. Die Beweglichkeit der Koppelstange ist dann durch den Anschlag begrenzt. Insbesondere schlägt die Koppelstange beim Einschieben der Koppelstange in den Zylinder oder beim Ausfahren der Koppelstange aus dem Zylinder an dem Anschlag an.

Das Rückstellelement kann beispielsweise als Feder, insbesondere Spiralfeder, oder als elastisches Element (beispielsweise gefertigt aus einem Elastomer) ausgebildet sein und in der Offenposition und der Zwischenposition bereits vorgespannt vorliegen.

Das Umlenkmittel kann z.B. von dem Verschlusselement bereitgestellt sein, insbesondere mit dem Verschlusselement verbunden sein, insbesondere direkt an diesem angeordnet sein.

Das Führungselement kann gemäss einer Ausführungsform mit der Ventilwand fest (unbeweglich) verbunden sein, insbesondere (direkt) an dieser angeordnet sein.

Denkbar sind auch Lösungen, bei welchen das Umlenkmittel nicht seitens des Verschlusselements vorliegt, sondern das Führungselement an diesem angeordnet ist und das Umlenkmittel strukturell separiert davon z.B. mit der Ventilwand verbunden ist, also Ausführungen mit umgekehrter Anordnung dieser Elemente. Auch diese Varianten sind Gegenstand der vorliegenden Erfindung.

Das Umlenkmittel ist vorzugsweise als Rolle oder (abgerundetes) Gleitelement zur Umlenkung der Bewegungsrichtung ausgebildet. Die Oberfläche des Umlenkmittels kann z.B. in besonderer Weise gehärtet ausgeführt sein um einen möglichen Verschleiss zu reduzieren. Alternativ kann die Lauffläche beispielsweise gummiert sein, d.h. mit einem elastischen gummiartigen Material, z.B. Polymer, versehen sein zum Zweck einer nach Möglichkeit stossarmen und ruhigen Führung des Verschlusselements beim Schliessvorgang.

Gemäss einer Ausführungsform kann die Verschlussanordnung mindestens zwei Verbindungselemente aufweisen, die in Verstellrichtung der Koppelstange parallel zueinander beabstandet sind. Jedes der Verbindungselemente ist jeweils an dem einem Elementende an der Rückseite des Verschlusselements, die der Verschlussseite gegenüber liegt, über ein erstes Gelenk schwenkbar gelagert und an dem anderen Elementende an dem Kopplungseinheit über ein zweites Gelenk schwenkbar gelagert. Die mindestens zwei Verbindungselemente, die Rückseite des Verschlusselements und die Kopplungseinheit bilden ein durch die ersten Gelenke und zweiten Gelenke gelenkiges Parallelogramm, so dass das Verschlusselement und die Kopplungseinheit parallel beabstandet zueinander in den beiden Verstellrichtungen der Koppelstange schwenkbar sind.

Die erfindungsgemässe Vorrichtung wird nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Figs. 1a-c: ein erfindungsgemässes Vakuumventil zum Verschliessen einer Öffnung bzw. zum Abschliessen eines Volumens im Querschnitt in unterschiedlichen Stellungen;
- Fig. 2: eine weitere Ausführungsform eines erfindungsgemässen Vakuumventils in perspektivischer Ansicht; und
- Figs. 3a-c: eine weitere Ausführungsform eines erfindungsgemässen Vakuumventils in unterschiedlichen Ansichten.

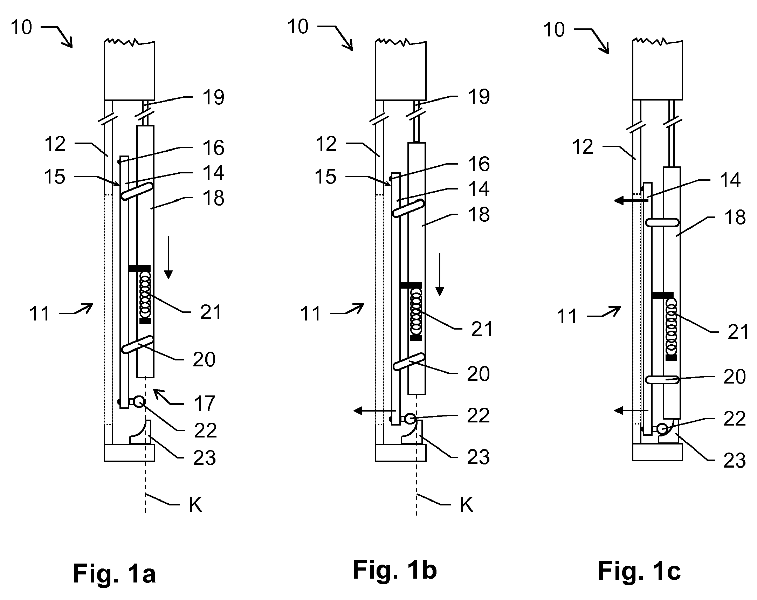

Figur 1a zeigt ein erfindungsgemässes Vakuumventil 10, das zum Abschliessen einer Öffnung 11 ausgebildet ist, im Querschnitt. Das Ventil 10 weist eine Ventilwand 12 mit einem Ventilsitz auf. Der Ventilsitz umläuft die Öffnung 11 und korrespondiert mit seiner Form und Grösse mit einer Auflagefläche eines Verschlusselements 14. Das Verschlusselement 14 ist z.B. als runder Ventilteller oder in einer alternativen, dem Fachmann bekannten Form - z.B. länglich oder rechtecksförmig - ausgebildet.

In der gezeigten Ausführungsform ist eine Dichtung 16 auf der Verschlussseite 15 des Verschlusselements 14 aufgebracht, insbesondere auf der Auflagefläche. Diese Dichtung 16 kann beispielsweise als Polymer mittels Vulkanisation auf das Verschlusselement 14 aufvulkanisiert sein. Alternativ kann die Dichtung 16 z.B. als O-Ring in einer Nut des Verschlusselements 14 ausgeführt sein. Auch kann ein Dichtmaterial auf das Verschlusselement 14 aufgeklebt sein und dadurch die Dichtung 16 verkörpern. In einer alternativen Ausführungsform kann die Dichtung 16 seitens der Ventilwand 12, insbesondere auf dem Ventilsitz, angeordnet sein. Auch Kombinationen dieser Ausführungen sind denkbar.

Das Verschlusselement 14 bildet einen Teil einer Verschlussanordnung 17, deren Kopplungseinheit 18 über eine Koppelstange 19 mit einer Antriebseinheit, z.B. Motor, Pneumatik oder Hydraulik, verbunden und mittels dieser linear entlang einer Koppelstangenachse K gesteuert bewegbar ist.

Die Kopplungseinheit 18 und das Verschlusselement 14 sind mittels Verbindungselementen 20 relativ zueinander beweglich verbunden. Die Verbindungselemente 20 sind hierzu jeweils mit einem Gelenk seitens der Kopplungseinheit 18 und seitens des Verschlusselements 14 beweglich verbunden. Dadurch ist eine Beweglichkeit des Verschlusselements 14 relativ zur Kopplungseinheit 18 unter Beibehaltung einer parallelen Ausrichtung gegeben.

Die Verschlussanordnung 17 weist zudem ein Rückstellelement 21, hier beispielsweise verkörpert durch eine Feder, auf. Das Rückstellelement 21 ist sowohl mit dem Verschlusselement 14 als auch mit der Kopplungseinheit 18 (mittelbar) verbunden. In der in Figur 1a gezeigten geöffneten Stellung der Verschlussanordnung 17 ist das Rückstellelement 21 vorgespannt und bewirkt dadurch eine Zugkraft an den beiden Befestigungspunkten. Durch diese Zugkraft wird das Verschlusselement 14 in einer definierten Lage relativ zur Kopplungseinheit 18 und mit definiertem Abstand zur Ventilwand 12 bzw. zum Ventilsitz gehalten.

Durch die Vorspannung kann somit der Abstand zwischen Ventilwand 12 und Verschlusselement 14 verlässlich während der Öffnung des Ventils und während der Schliessbewegung bis unmittelbar vor dem tatsächlich stattfindenden Schliessen des Ventils bereitgestellt werden. Dadurch wird in vorteilhafter Weise eine eventuelle Partikelbildung bei einer Berührung dieser Teile und einer gleichzeitigen Relativbewegung parallel zur Koppelstangenachse K (Querbeanspruchung der Dichtung) zuverlässig verhindert.

Das Ventil 10 weist ausserdem eine Führungsvorrichtung auf, welche eine Querbewegung des Verschlusselements 14 quer zur Koppelstangenachse K, insbesondere orthogonal in Richtung des Ventilsitzes, im Zuge einer Schliessbewegung der Verschlussanordnung 17 bewirkt. Dadurch wird die über den grössten Teil des Verstellwegs ausschliesslich vorliegende Linearbewegung des Verschlusstellers 14 bei der Bewegung in den Geschlossenzustand des Ventils 10 (Figur 1c) mit der Querbewegung überlagert, so dass das Verschlusselement 14 im letzten Bewegungsabschnitt der Schliessbewegung nicht mehr linear parallel zur Koppelstangenachse K, sondern (auch) quer zu dieser Achse bewegt wird, insbesondere mit fortlaufender Veränderung der Bewegungsrichtung.

Die Führungsvorrichtung weist ein Umlenkmittel 22 auf, das seitens des Verschlusselements 14 angeordnet ist, insbesondere direkt an diesem starr befestigt ist. Das Umlenkmittel 22 kann beispielsweise als eine Umlenkrolle, ein Rad oder als ein z.B. abgerundetes Gleitelement ausgebildet sein. Dem Fachmann sind weitere alternative Ausgestaltungsmöglichkeiten hierfür mit gleicher Wirkung bekannt, welche ebenso als Umlenkelement 22 im Sinne der Erfindung angesehen werden.

Zudem ist ein Führungselement 23 als Teil der Führungsvorrichtung vorgesehen. Dieses Führungselement 23 ist wiederum mit dem Ventil 10, hier starr mit der Ventilwand 12, verbunden. Wie hier gezeigt, kann das Führungselement 23 eine Führungsfläche mit einem im Querschnitt gekrümmten Oberflächenverlauf bereitstellen. Gemäss alternativer Ausführungen kann der Oberflächenverlauf ungekrümmt (flach) und quer zur Koppelstangenachse K ausgebildet sein. Auch Mischformen aus einer gekrümmten und einer flachen Führungsoberfläche sind möglich.

Die beiden Elemente - Umlenkmittel 22 und Führungselement 23 -stehen über weite Strecken einer Schliessbewegung nicht miteinander in Kontakt. In Figur 1a ist die Bewegung aus einer Offenposition, in der die Öffnung 11 insbesondere vollständig freigegeben ist, hin zu einer Zwischenposition, bei welcher das Umlenkmittel 22 mit dem Führungselement 23 im Rahmen der Schliessbewegung erstmalig in Kontakt gebracht wird, gezeigt. Figur 1b zeigt das Vorliegen der Verschlussanordnung 17 bzw. des Verschlusselements 14 in der Zwischenposition - Umlenkmittel 22 und Führungselement 23 beginnen sich durch die hier gezeigte Vertikalbewegung der Verschlussanordnung 17 (nach unten) zu berühren.

Figur 1c zeigt das Ventil 10 in der Geschlossenposition, d.h. das Verschlusselement 14 wird mit dessen Verschlussseite 15 auf den Ventilsitz gedrückt und verschliesst damit die Öffnung 11 gasdicht. Dieses Andrücken des Verschlusselements 14 wird mittels eines definierten Zusammenwirkens des Umlenkmittels 22 und Führungselements 23 bereitgestellt. Während der Bewegung der Verschlussanordnung 17 aus der Zwischenposition in die Geschlossenposition kontaktiert das Umlenkmittel 22 die Kontaktfläche des Führungselements 23. Dadurch wird das Verschlusselement 14 zusätzlich zur Bewegung entlang der Achse k mit einer orthogonal zur Achse K liegenden Richtungskomponente bewegt. Durch die Krümmung des Führungselements 23 nimmt der Anteil der Bewegung des Verschlusselements 14 in Querrichtung in Vergleich zur Linearbewegung im Zuge dieser Schliessbewegung zu, d.h. die Linearbewegung wird bis zum Verschliessen der Öffnung 11 vollständig in eine Querbewegung überführt.

Die Verbindungselemente 20 wirken dabei insbesondere als Hebel durch welche das Verschlusselement 14 auf den Ventilsitz gedrückt wird. Nach einem anfänglichen Kontakt zwischen Verschlusselement 14 und Ventilsitz schwenken diese Hebel im Speziellen noch weiter aus und sorgen durch ihre spezifische Ausgestaltung und Anordnung (z.B. Länge und Befestigungspunkt) für den gewünschten Anpressdruck.

Eine solche Krümmung der Oberfläche des Führungselements 23 bietet zudem den Vorteil, dass hierdurch die Bewegung des Verschlusses 14 so geführt werden kann, dass zum Zeitpunkt des Kontaktierens von Dichtung 16 und Ventilsitz die Bewegung bereit grösstenteils oder vollständig in die orthogonale Querbewegung übergegangen ist und dadurch keinerlei oder nur eine sehr geringe Querbeanspruchung des Dichtmaterials beim Abdichten auftritt. Dadurch kann ein potentieller Partikelabrieb weitgehend bzw. vollständig verhindert werden.

Mit der Querbewegung des Verschlusselements 14 beim Schliessen wird ausserdem das Rückstellelement 21 (Feder) zunehmend gespannt. Hierdurch wird ein Teil der kinetischen Bewegungsenergie (bewirkt durch die lineare Schliessbewegung) des Verschlusselements 14 in potentielle Spannungsenergie des Rückstellelements 21 umgewandelt. Durch diese Verringerung der kinetischen Energie wird eine entsprechende Abdämpfung der Schliessbewegung erreicht, so dass ein Anschlagen der Kopplungseinheit 18 an einem Anschlag zur Begrenzung des Bewegungsweges in linearer Richtung (hier: Führungselement 23 als Anschlag) am Ende der Schliessbewegung weniger stark ausfällt. Vorteilhafterweise kann hierdurch ein Materialverschleiss verringert bzw. die betroffenen Bauteile (insbesondere der Anschlag selbst und dessen Befestigung am Ventil) weniger massiv und somit günstiger (hinsichtlich z.B. Herstellungsaufwand und Kosten) ausgebildet werden. Auch die Verschlussanordnung und der Antrieb erfahren durch den verminderten Stoss (und dessen Rückstoss) eine verringerte Beanspruchung.

Der Anschlag kann alternativ (nicht gezeigt) mit der vorgesehen Antriebseinheit bereitgestellt sein. Hierbei kann der Anschlag im Inneren der Antriebseinheit (z.B. Antriebszylinder mit innenlaufender Führungsstange/Koppelstange) vorgesehen sein, sodass die Stange in ihrer Beweglichkeit entlang einer Antriebsachse des Antriebszylinders in definierter Weise begrenzt ist, insbesondere in Hinblick auf die Einschiebbarkeit der Führungsstange in den Zylinder.

Wird die Verschlussanordnung 17 aus der Geschlossenposition zurück in die Offenposition bewegt, bewirkt die gespannte Feder 21 und die durch die Verbindungselemente 20 zulässige Relativbewegung zwischen Verschlusselement 14 und Kopplungseinheit 18, dass das Verschlusselement 14 ebenso zurück in eine Lage mit definiertem Abstand zum Ventilsitz bzw. zur Ventilwand 12 gebracht und gehalten wird.

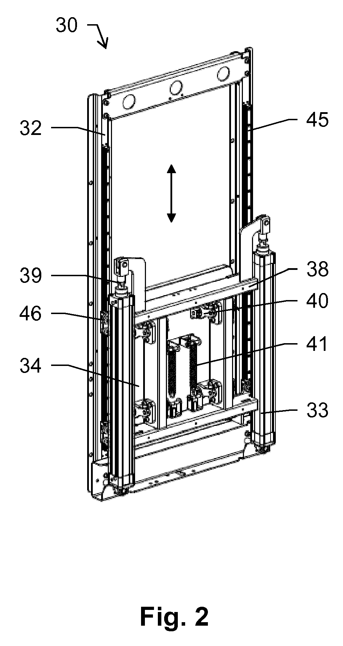

Figur 2 zeigt eine Ausführungsform eines Ventilverschlusses 30 eines als Torventil erfindungsgemäss ausgebildeten Vakuumventils. Der Verschluss 30 ist perspektivisch in geschlossenem Zustand von seiner Rückseite gezeigt.

Das Verschlusselement 34, d.h. das Tor oder die Türe des Ventils, ist hier rechteckförmig mit abgerundeten Ecken ausgebildet. Das Tor 34 ist durch die vier Kniehebelelemente 40 (Verbindungselemente) mit einem separaten Rahmen 38 (Kopplungseinheit) verbunden. Der Rahmen 38 wiederum ist mittels der Schubstangen 39 an die Antriebe 33 gekoppelt und kann dadurch gesteuert linear bewegt werden.

Die Antriebe 33 sind hier zylinderförmig mit in den Zylindern innenlaufenden Schubstangen 39 ausgebildet. Für eine Vorab-Dämpfung der Schliessbewegung können im Inneren der Zylinder entsprechende Dämpfungselemente und/oder eine spezifische elektronische Ansteuerung der im Zylinder vorgesehenen Antriebsmotoren vorgesehen sein. Eine solche Vorab-Dämpfung kann bereits vor Erreichen der Zwischenposition erfolgen und kann auch über das Erreichen der Zwischenposition hinaus bewirkt werden.

Zudem weist der Verschluss 30 eine Verschlussführung mit zwei an dem Ventil befestigten Führungsschienen 45 und korrespondierend zu diesen Schienen 45 ausgebildeten Haltern 46 auf, die an dem Rahmen 38 befestigt sind. Die Verschlussführung stellt damit eine lineare Beweglichkeit des Rahmens 38 parallel zu den Führungsschienen 45 bereit und sicher. Die Schienen sind an einer Verschlusskomponente 32 angebracht, die in einem montierten Zustand des Verschlusses 30 insbesondere gleichbedeutend mit der Ventilwand (vgl. Figur 1a-c) sein können.

Der Verschluss 30 verfügt über eine Führungsvorrichtung (hier nicht gezeigt), welche vergleichbar ausgebildet und eine vergleichbare Wirkung erzielt wie diejenige in den Figuren 1a-c gezeigte Führungsvorrichtung. Das Tor wird in der Endphase der Schliessbewegung in Richtung Ventilsitz bewegt, wodurch eine Energieaufnahme an den Federn 41 stattfindet und eine Abdämpfung (Abbremsung) der Schliessbewegung erfolgt.

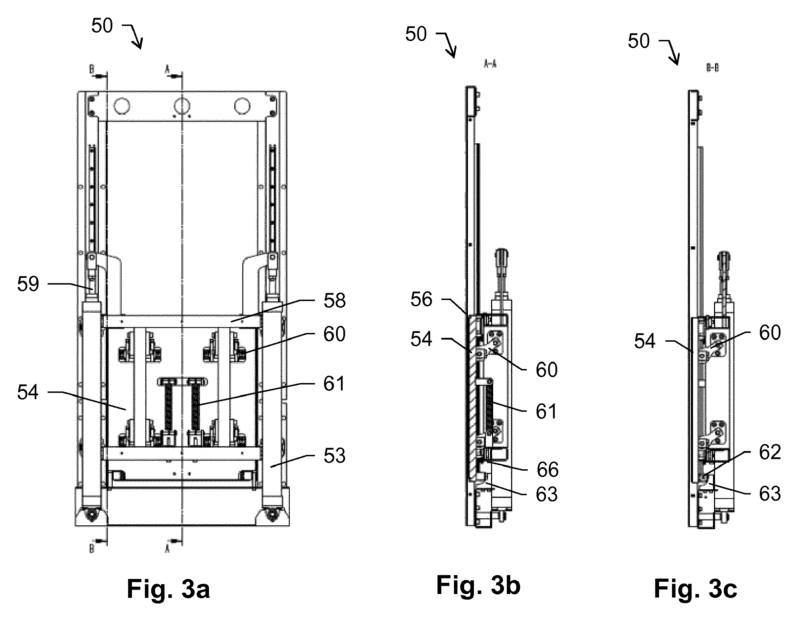

Die Figuren 3a-c zeigen eine weitere Ausführungsform eines Ventilverschlusses 50 eines erfindungsgemässen Vakuumventils. Der Verschlusszustand ist hier in der Zwischenposition, d.h. bei einer Schliessbewegung im Übergang zur Geschlossenposition, gezeigt. Figur 3a zeigt den Verschluss 50 von dessen Rückseite, die Figuren 3b und 3c zeigen jeweils einen Querschnitt durch den Verschluss 50 entlang der Ebenen A-A und B-B.

Das Verschlusstor 54 ist mittels eines Hebelmechanismus 60 mit dem Träger 58 (Kopplungseinheit) gekoppelt. Der Hebelmechanismus 60 weist für jeden der hier insgesamt vier Verbindungspunkte an dem Verschlusstor 54 jeweilige Verbindungsschenkel auf, die seitens des Verschlusstors 54 und seitens des Trägers 58 jeweils mit Gelenken beweglich verbundnen sind. Durch diese konstruktive Anordnung ist das Tor 54 zwar bezüglich dessen Abstands zum Träger 58 beweglich variierbar, jedoch verbleibt das Tor 54 stets in einer parallelen Gegenüberlage zum Träger 58.

An dem Träger 58 ist wiederum die eine Seite eines Federpaars 61 befestigt, wobei dessen zweite Seite mittels eines Auslegers mit dem Verschlusstor 54 verbunden ist. Hierdurch, d.h. durch die vorgespannte Befestigung der Federn 61, wird eine Rückstellkraft auf des Tor 54 bezüglich des Trägers 58 bewirkt, sodass das Tor 54 in einem nicht geschlossenen Zustand mit einem definierten Abstand zum Träger 58 vorliegt und dessen Beweglichkeit eine ebenso definierte Vergrösserung des Abstands - bedingt durch die Ausgestaltung (insbesondere Länge und Verschwenkbarkeit) der Verbindungsschenkel - zulässt. Dieser Verstellweg orthogonal zur Erstreckungsebene (Oberfläche der in einem Ventil zur Öffnung gerichteten Verschlussseite) des Tors 54 (im geöffneten Zustand) wird genutzt um eine berührungslose Führung des Verschlusses 54 bis hin zur tatsächlichen Geschlossenposition verlässlich bereitzustellen und um für das Schliessen ein Andrücken der Dichtung 56 bzw. der Dichtfläche des Tors 54 im Wesentliches in Normalenrichtung der Dichtfläche (d.h. in eine Richtung parallel zur Normalen auf die Dichtfläche) zu erreichen. Eine ungewünschte Partikelbildung z.B. durch eine Querbeanspruchung des Dichtmaterials kann dadurch verhindert oder zumindest deutlich reduziert werden.

An dem Tor 54 ist an dessen unterem Ende ein Rad 62 angeordnet, das in Zusammenwirkung mit der Umlenkführung 63 die Bewegung des Tors 54 bei der Schliessbewegung in Richtung der Normalen der Verschlussfläche des Tors 54 bewirkt. Wird in der gezeigten Stellung der Träger 58 weiter in Richtung der Achse der Schubstange 59 nach unten bewegt, so wird auf das Rad 62 eine Querkraft bewirkt, wobei das Rad 62 über die Führungsfläche der Umlenkführung 63 nicht allein in diese Richtung sondern auch in Normalenrichtung bewegt bzw. gedrückt wird. Dabei schwenken die Verbindungsschenkel 60 aus und die Federn werden zusätzlich gespannt. Dies geschieht bis der trägerseitige Anschlag 66 an der hier als Gegenanschlag ausgebildeten Umlenkführung 63 anschlägt. Es versteht sich dass der Gegenanschlag als separates Bauteil unabhängig von der Umlenkführung 63 ausgebildet sein kann. Durch die Aufnahme von potentieller Energie durch die Federn 61 wird während dieser Bewegung in die Geschlossenposition die Bewegung des Tors 54 abgebremst und das Anschlagen des Trägers 58 somit gedämpft.

Zumindest die Verbindungsschenkel 60, die Umlenkführung 63, das Rad 62 und die relative Positionierung von Anschlag 66 und Gegenanschlag sind derart ausgeführt und angeordnet, dass die Verbindungsschenkel 60 beim Anschlagen des Trägers 58 im Wesentlichen voll ausgeschwenkt sind und der Abstand zwischen Träger 58 und Tor 54 maximal ist. Die Bewegungskomponente des Tors 54 in orthogonaler Richtung zur Schubstangenachse nimmt betragsmässig im Verglich zur Komponente in axialer Richtung von Beginn der Bewegung aus der Zwischenposition in die Geschlossenposition zu, bis am Ende der Schliessbewegung diese Bewegungskomponente allein bestehen bleibt, d.h. eine Bewegung des Tors 54 nur noch in diese Richtung erfolgt.

Es versteht sich, dass die dargestellten Figuren nur mögliche Ausführungsbeispiele schematisch darstellen. Die verschiedenen Ansätze können erfindungsgemäss ebenso miteinander sowie mit Ventilen zum Verschliessen von Prozessvolumina unter Vakuumbedingungen des Stands der Technik kombiniert werden.

## Patentansprüche

1. Vakuumventil (10), insbesondere Vakuumschieberventil, insbesondere Torventil, zum im Wesentlichen gasdichten Verschliessen einer Öffnung (11), mit
• einer die Öffnung (11) umlaufenden Ventilwand (12) mit Ventilsitz,
• einer Verschlussanordnung (17) mit
□ einem Verschlusselement (14,34,54) mit einer Verschlussseite (15),
□ einer Kopplungseinheit (18,38,58) und
□ mindestens einem Verbindungselement (20,40,60), insbesondere Hebelmechanismus, welches derart mit dem Verschlusselement (14,34,54) und der Kopplungseinheit (18,38,58) verbunden ist und derart ausgebildet ist, dass das Verschlusselement (14,34,54) mit im Wesentlichen paralleler Ausrichtung relativ zur Kopplungseinheit (18,38,58) beweglich gelagert ist,
• mindestens einer Koppelstange (19,39,59), die mit der Kopplungseinheit (18,38,58) mechanisch gekoppelt ist,
• einer Linearantriebseinheit (33,53), mittels welcher die Koppelstange (19,39,59) in die beiden Verstellrichtungen entlang ihrer Koppelstangenachse (K) geradlinig verstellbar und somit die Verschlussanordnung (17) zwischen
□ einer die Öffnung (11) freigebenden Offenposition,
□ einer über die Öffnung (11) geschobenen Zwischenposition, in welcher sich das Verschlusselement (14,34,54) zumindest teilweise in einer im Wesentlichen parallel beabstandeten Gegenüberlage zum Ventilsitz befindet, und
□ einer die Öffnung (11) verschliessenden Geschlossenposition, wobei das Verschlusselement (14,34,54) mit dessen Verschlussseite (15) auf den Ventilsitz gedrückt wird und die Öffnung (11) gasdicht verschliesst, im Wesentlichen parallel zum Ventilsitz verschiebbar ist,
**dadurch gekennzeichnet, dass**
• die Verschlussanordnung (17) zumindest ein Rückstellelement (21,41,61) aufweist, welches derart mit dem Verschlusselement (14,34,54) und der Kopplungseinheit (18,38,58) verbunden ist, dass durch eine dadurch anliegende Rückstellkraft und mittels des Verbindungselements (20,40,60) das Verschlusselement (14,34,54) in der Offenposition und in der Zwischenposition in der definierten, im Wesentlichen parallel beabstandeten Gegenüberlage zum Ventilsitz vorliegt, und
• das Vakuumventil (10) ein Umlenkmittel (22,62) und ein Führungselement (23,63) aufweist, und das Umlenkmittel (22,62) und das Führungselement (23,63) derart ausgeformt und angeordnet sind, dass bei der Verschiebung aus der Zwischenposition in die Geschlossenposition das Umlenkmittel (22,62) und das Führungselement (23,63) derart zusammenwirken, dass eine Querbewegung des Verschlusselements (14,34,54) quer zur Koppelstangenachse (K) eingeleitet und/oder bewirkt wird.

2. Vakuumventil nach Anspruch 1,
**dadurch gekennzeichnet, dass**
• das Führungselement (23,63) eine Führungsfläche mit definiertem Oberflächenverlauf aufweist,
• das Umlenkmittel (22,62) bei der Verschiebung aus der Zwischenposition in die Geschlossenposition mit der Führungsfläche zusammenwirkt und
• die Querbewegung des Verschlusselements (14,34,54) in Abhängigkeit des Oberflächenverlaufs bewirkt wird.

3. Vakuumventil nach Anspruch 2,
**dadurch gekennzeichnet, dass**
das Führungselement (23,63) mit
• einem linear flachen und quer zur Koppelstangenachse sich erstreckenden, insbesondere keilförmigen, oder
• einem gekrümmten, insbesondere kurvenförmigen, Oberflächenverlauf der Führungsfläche ausgebildet ist.

4. Vakuumventil (10) nach einem der Ansprüche 1 bis 3,
**dadurch gekennzeichnet, dass**
• das Rückstellelement (21,41,61) derart angeordnet ist, dass die Querbewegung des Verschlusselements (14,34,54) bei der Verschiebung aus der Zwischenposition in die Geschlossenposition eine Zunahme der Rückstellkraft bewirkt, und
• die Zunahme der Rückstellkraft eine Dämpfung der Bewegung der Verschlussanordnung (17) bei der Bewegung aus der Zwischenposition in die Geschlossenposition bewirkt.

5. Vakuumventil (10) nach einem der Ansprüche 1 bis 4,
**dadurch gekennzeichnet, dass**
• das Rückstellelement (21,41,61) derart angeordnet ist, dass mit der Querbewegung des Verschlusselements (14,34,54) bei der Verschiebung aus der Zwischenposition in die Geschlossenposition potentielle Energie, insbesondere Spannenergie, an dem Rückstellelement (21,41,61) verrichtet wird, und
• ein entsprechender Anteil der kinetischen Energie der Verschlussanordnung (17) verursacht durch das Verschieben aus der Offenposition in die Zwischenposition, insbesondere in die Geschlossenposition, in die potentielle Energie umgewandelt wird.

6. Vakuumventil (10) nach einem der Ansprüche 1 bis 5,
**dadurch gekennzeichnet, dass**
die Querbewegung des Verschlusselements (14,34,54) der im Wesentlichen zum Ventilsitz parallelen Verschiebebewegung bei der Verschiebung aus der Offenposition in die Geschlossenposition überlagert wird.

7. Vakuumventil (10) nach einem der Ansprüche 1 bis 6,
**dadurch gekennzeichnet, dass**
das Vakuumventil (10) eine Verschlussführung (45) aufweist, wobei die Verschlussführung mit der Ventilwand (12) und der Verschlussanordnung (17) gekoppelt ist und eine lineare Beweglichkeit der Verschlussanordnung (17), insbesondere der Kopplungseinheit (18,38,58), in einer Richtung parallel zum Ventilsitz bereitstellt.

8. Vakuumventil (10) nach Anspruch 7,
**dadurch gekennzeichnet, dass**
die Verschlussführung (45) zumindest zwei Führungsschienen aufweist, welche parallel beabstandet an zwei gegenüberliegenden Seiten der Öffnung (11) an der Ventilwand (12) angeordnet sind und die Kopplungseinheit (18,38,58) mittels der Führungsschienen linear geführt ist.

9. Vakuumventil (10) nach einem der Ansprüche 1 bis 8,
**dadurch gekennzeichnet, dass**
das Vakuumventil (10) einen Anschlag (66) aufweist, wobei der Anschlag (66) so angeordnet ist, dass eine Beweglichkeit der Verschlussanordnung (17) in Richtung der Koppelstangenachse (K) in Schliessrichtung begrenzt ist.

10. Vakuumventil (10) nach Anspruch 9,
**dadurch gekennzeichnet, dass**
• der Anschlag durch das Führungselement gebildet und/oder an der Kopplungseinheit (18,38,58) angeordnet ist, und/oder
• die Kopplungseinheit (18,38,58) bei Erreichen der Geschlossenposition an dem Anschlag anschlägt, und/oder
• der Anschlag im Inneren einer als Antriebszylinder ausgebildeten Linearantriebseinheit (33,53) ausgeformt ist.

11. Vakuumventil (10) nach Anspruch 9 oder 10,
**dadurch gekennzeichnet, dass**
die Bewegung der Verschlussanordnung (17) bis zum Anschlag der Kopplungseinheit (18,38,58) an dem Anschlag mittels des Rückstellelements (21,41,61) abgebremst wird und das Anschlagen gedämpft erfolgt.

12. Vakuumventil (10) nach einem der Ansprüche 1 bis 11,
**dadurch gekennzeichnet, dass**
das Rückstellelement (21,41,61) als Feder, insbesondere Spiralfeder, oder als elastisches Element ausgebildet ist und in der Offenposition und der Zwischenposition vorgespannt vorliegt.

13. Vakuumventil (10) nach einem der Ansprüche 1 bis 12,
**dadurch gekennzeichnet, dass**
• das Führungselement (23,63) mit der Ventilwand verbunden ist, insbesondere an dieser angeordnet ist, und/oder
• das Verschlusselement (14,34,54) das Umlenkmittel (22,62) aufweist, insbesondere wobei das Umlenkmittel (22,62) mit dem Verschlusselement (14,34,54) verbunden ist, insbesondere direkt an diesem angeordnet ist.

14. Vakuumventil (10) nach einem der Ansprüche 1 bis 13,
**dadurch gekennzeichnet, dass**
das Umlenkmittel (22,62) als Rolle oder Gleitelement zur Umlenkung der Bewegungsrichtung ausgebildet ist.

15. Vakuumventil (10) nach einem der Ansprüche 1 bis 14,
**dadurch gekennzeichnet, dass**
die Verschlussanordnung (17) mindestens zwei Verbindungselemente (20,40,60) aufweist, die in Verstellrichtung der Koppelstange (19,39,59) parallel zueinander beabstandet sind, wobei
• jedes der Verbindungselemente jeweils
□ an dem einem Elementende an der Rückseite des Verschlusselements (14,34,54), die der Verschlussseite (15) gegenüber liegt, über ein erstes Gelenk schwenkbar gelagert ist und
□ an dem anderen Elementende an dem Kopplungseinheit (18,38,58) über ein zweites Gelenk schwenkbar gelagert ist, und
• die mindestens zwei Verbindungselemente (20,40,60), die Rückseite des Verschlusselements (14,34,54) und die Kopplungseinheit (18,38,58) ein durch die ersten Gelenke und zweiten Gelenke gelenkiges Parallelogramm bilden, so dass das Verschlusselement (14,34,54) und die Kopplungseinheit (18,38,58) parallel beabstandet zueinander in den beiden Verstellrichtungen der Koppelstange (19,39,59) schwenkbar sind.
